# DEMANDE DE BREVET EUROPEEN

(11) **EP 3 640 140 A1**
(43) Date de publication de la demande: **22.04.2020**
(21) Numéro de dépôt: 19203144.1
(22) Date de dépôt: 15.10.2019
(51) Int. Cl.: B64D 15/02, B64D 33/02, F02C 7/047

(54) **NACELLE DE MOTEUR D'AÉRONEF COMPRENANT UN SYSTÈME DE PROTECTION CONTRE LE GIVRE**

(30) Priorité: 19.10.2018 FR 1871236
(71) Demandeur: AIRBUS OPERATIONS (S.A.S.), 31060 Toulouse (FR)
(72) Inventeur: PORTE, Alain, 31060 TOULOUSE Cedex 9 (FR); ALBET, Gregory, 31060 TOULOUSE Cedex 9 (FR); ZEBIAN, Maxime, 31060 TOULOUSE Cedex 9 (FR); PONS, François, 31060 TOULOUSE Cedex 9 (FR)
(74) Mandataire: Gicquel, Olivier Yves Gérard

(57) **Abrégé**

Le système de protection (1) contre le givre pour nacelle (2) de moteur (3) d'aéronef, la nacelle (2) comprenant une virole interne (5), une lèvre (7) d'entrée d'air formant un bord d'attaque de la nacelle (2), le système de protection comprenant un dispositif échangeur de chaleur (11) comportant au moins un caloduc (12) configuré pour transférer à la virole interne (5) de la chaleur (14) émise par une source chaude.

## Description

La présente invention concerne une nacelle de moteur d'aéronef comprenant un système de protection contre le givre d'une entrée d'air.

### ETAT DE LA TECHNIQUE

Les bords d'attaque des aéronefs, en particulier les lèvres d'entrée d'air des nacelles de moteur d'aéronef, peuvent subir la formation de givre qui s'accumule pour constituer des blocs de glace. L'apparition de ces blocs de glace peut perturber l'alimentation en air du moteur. Par exemple, des blocs de glace peuvent se détacher et venir heurter les pales de soufflante de moteur. Ils sont donc susceptibles de fragiliser les pales de soufflante, voire de les casser.

Il existe un système de protection du givre qui prélève de l'air chaud sur des étages de compression du moteur de l'aéronef pour l'injecter dans un l'espace annulaire qui est situé derrière la lèvre de la nacelle. L'air chaud circule alors dans l'espace annulaire chauffe la lèvre et est envoyé dans des canaux de panneaux acoustiques afin de chauffer la peau desdits panneaux acoustiques. Toutefois, la peau des panneaux acoustiques est chauffée sur une courte distance ce qui entraîne un dégivrage sur une courte distance. Cette distance peut être insuffisante pour des entrées d'air très courtes. En effet, le raccourcissement des entrées d'air peut conduire à rendre la surface des panneaux acoustiques aérodynamiquement plus sensibles.

### EXPOSE DE L'INVENTION :

La présente invention a pour objet de pallier ces inconvénients en proposant un système de protection contre le givre d'une nacelle.

À cet effet, l'invention concerne un système de protection contre le givre pour nacelle de moteur d'aéronef, la nacelle comprenant une virole interne présentant une face interne, une lèvre d'entrée d'air présentant une face interne et formant un bord d'attaque de la nacelle et un cadre avant définissant, avec la lèvre, un espace annulaire.

Selon l'invention, le système de protection comprend un dispositif échangeur de chaleur comportant au moins un caloduc configuré pour transférer à la virole interne située en aval du cadre avant de la chaleur émise par une source chaude dans l'espace annulaire.

Ainsi, grâce à l'invention, la lèvre d'entrée d'air de la nacelle est dégivrée dans les mêmes conditions que celles de l'art antérieur mais une partie de la virole interne située derrière le cadre avant bénéficie aussi du dégivrage. Un tel dispositif échangeur de chaleur permet donc de protéger du givre la lèvre et la virole interne de manière plus efficace et économique grâce au ou aux caloducs. La chaleur émise par une source chaude est utilisée pour dégivrer une zone plus étendue de la nacelle allant de l'espace annulaire jusqu'à la virole interne. De plus, grâce à ce système, il est avantageux de décaler le cadre avant vers l'avant, en direction du bord d'attaque de la nacelle, diminuant par là-même le volume de l'espace annulaire. Cet avantage permet de diminuer le débit d'air chaud nécessaire pour dégivrer le volume de l'espace annulaire.

Selon des modes particuliers de l'invention :
- le dispositif échangeur de chaleur comprend en outre un fluide caloporteur, au moins un évaporateur connecté thermiquement à la source chaude, le ou les évaporateurs étant configurés pour extraire au moins une partie de la chaleur fournie par la source chaude, la chaleur extraite étant transférée au fluide caloporteur, au moins un condenseur fixé sur la face interne de la virole interne située en aval du cadre avant, le ou les condenseurs étant configurés pour fournir au moins une partie de la chaleur extraite par le ou les évaporateurs, la chaleur extraite étant transférée au ou aux condenseurs par l'intermédiaire du fluide caloporteur, chacun des évaporateurs étant relié de manière fluidique à au moins un condenseur par au moins un caloduc dans lequel circule le fluide caloporteur.
- le ou les évaporateurs sont fixés sur la face interne de la lèvre d'entrée d'air en amont du cadre avant.
- le ou les caloducs sont oscillants. Cette caractéristique évite des opérations de maintenance à répétition.
- le ou les caloducs sont des caloducs à boucle.
- le ou les caloducs comprennent au moins une conduite à liquide configurée pour transporter, du condenseur à l'évaporateur, le fluide caloporteur liquéfié par refroidissement dans le condenseur.
- le ou les caloducs comprennent au moins un tube capillaire comprenant un fluide à volume constant.
- le ou les évaporateurs sont répartis sur l'ensemble de la face interne de la lèvre.
- le ou les condenseurs sont répartis sur l'ensemble de la face interne de la virole interne.

### DESCRIPTION DETAILLEE :

L'invention sera mieux comprise à la lecture de la description qui suit et à l'examen des figures annexées.
Fig. 1 représente une vue de profil d'un moteur d'aéronef comprenant une alimentation en air chaud de l'espace annulaire de la lèvre.
Fig. 2 représente une coupe longitudinale d'une lèvre comprenant le système de protection contre le givre selon un mode de réalisation.
Fig. 3 représente une vue en coupe d'une lèvre comprenant le système de protection contre le givre selon un mode de réalisation.
Fig. 4 représente une vue schématique d'un dispositif d'étanchéité du système de protection contre le givre selon un mode de réalisation.

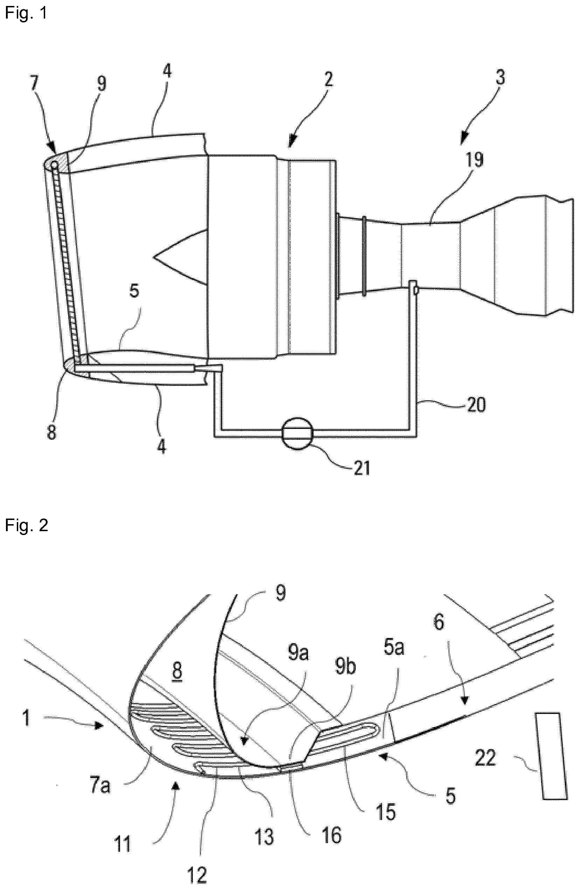

Il est représenté schématiquement sur [Fig. 2] un mode de réalisation d'un système de protection contre le givre pour une nacelle 2 de moteur 3 d'aéronef.

Une nacelle 2 de moteur 3 désigne un carénage entourant un moteur 3 d'aéronef, tel qu'un turboréacteur.

Elle comprend généralement une virole externe 4, une virole interne 5 présentant une face interne 5a et une lèvre 7 d'entrée d'air. Les deux viroles 4 et 5 sont généralement coaxiales et forment un espace entre elles. La lèvre 7 joint les deux viroles 4 et 5.

La virole externe 4 forme un capot externe de la nacelle 2. La virole interne 5 est pourvue d'au moins un panneau acoustique 6. La lèvre 7 forme un bord d'attaque de la nacelle 2 et comporte une face interne 7a.

La lèvre 7 présente un espace annulaire 8 qui est fermé par un cadre avant 9. La cloison interne 9 sépare l'espace annulaire 8 du reste de l'espace formé entre les deux viroles 4 et 5.

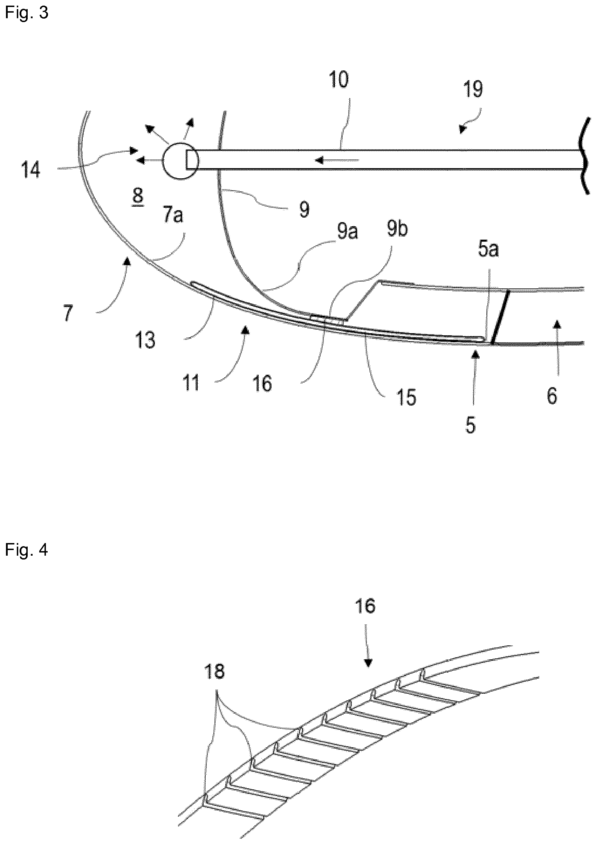

Les nacelles 2 sont habituellement équipées de panneaux acoustiques 6 recouvrant la paroi interne des nacelles 2 au niveau des entrées d'air en amont des soufflantes 22. Généralement, les panneaux acoustiques 6 ont une structure de type sandwich comportant une ou plusieurs couches de structure alvéolaire de type nid d'abeille apte à piéger le bruit. Cette couche de structure alvéolaire présente une face externe recouverte d'une couche poreuse, dite peau acoustique, et d'une face interne recouverte d'une couche imperméable, dite peau pleine. La composition des panneaux acoustiques 6 est connue de l'art antérieur et est représentée de manière schématique sur [Fig.2] et [Fig.3].

Le système de protection 1 comprend un dispositif échangeur de chaleur 11 configuré pour transférer au ou aux panneaux acoustiques 6 de la chaleur 14 émise par une source chaude.

Le dispositif échangeur de chaleur 11 comprend au moins un caloduc (« heat pipe » en anglais) 12 configuré pour transférer la chaleur 14 de la source chaude au ou aux panneaux acoustiques 6.

Un caloduc 12 désigne généralement un élément conducteur de chaleur fonctionnant selon le principe de transfert thermique par transition de phase d'un fluide.

Le dispositif échangeur de chaleur 11 comprend en outre un fluide caloporteur et au moins un évaporateur 13 connecté thermiquement à la source chaude et fixés sur la face interne 7a de la lèvre 7 d'entrée d'air par tout moyen de fixation adapté tel que le collage ou le soudage, en amont du cadre avant 9. Le ou les évaporateurs 13 sont configurés pour extraire au moins une partie de la chaleur 14 fournie par la source chaude. La chaleur 14 est alors transférée au fluide caloporteur, comme illustré sur [Fig. 2] et [Fig.3]. Selon un avantage de l'invention, le ou les évaporateurs 13 sont en contact direct avec la chaleur 14 fournie par la source chaude, ce qui améliore particulièrement le rendement du dispositif échangeur de chaleur 11.

Le dispositif échangeur de chaleur 11 comprend également au moins un condenseur 15 fixé sur la face interne 5a de la virole interne 5, en aval du cadre avant 9. La chaleur 14 extraite par le ou les évaporateurs 13 est transférée au ou aux condenseurs 15 par l'intermédiaire du fluide caloporteur. Le ou les condenseurs 15 sont configurés pour fournir au moins une partie de la chaleur 14 extraite par le ou les évaporateurs 13 au ou aux panneaux acoustiques 6.

Dans tout le document, on entend par « amont » la zone située avant le cadre avant 9, en direction du bord d'attaque de la nacelle 2 et par « aval » la zone située derrière le cadre avant 9, dans la direction opposée au bord d'attaque de la nacelle 2.

Selon ce mode de réalisation, le caloduc 12 s'étend de part et d'autre du cadre avant 9, le ou les évaporateurs 13 s'étendant sur la face interne 7a de la lèvre 7 en direction du bord d'attaque de la nacelle 2, le ou les condenseurs 15 s'étendant sur la face interne 5a de la virole 5, dans la direction opposée du bord d'attaque de la nacelle 2.

Le ou les caloducs 12 comprennent au moins une conduite à liquide configurée pour transporter, du condenseur 15 à l'évaporateur 13, le fluide caloporteur liquéfié par refroidissement dans le condenseur.

Comme cela est visible sur [Fig. 2] et [Fig. 3], la partie basse 9a de la cloison interne 9 n'est pas directement fixée sur la face interne 7a de la lèvre 7 mais est fixée sur un dispositif d'étanchéité 16 intercalé entre la face interne 7a de la lèvre 7 et la partie basse 9a de la cloison interne 9, tout en permettant le positionnement du ou des caloducs 12. Ce dispositif d'étanchéité 16 garantit que la chaleur 14 reste confinée dans l'espace annulaire 8 et ne se répand donc pas à l'arrière du cadre avant 9, dans l'espace formé entre les deux viroles 4 et 5.

Le dispositif d'étanchéité 16 représenté sur [Fig.4] est conformé pour s'adapter à la forme de ou des caloducs 12. Il peut se présenter sous la forme d'une plaque comportant des encoches 18 ayant les même formes et dimensions que les conduites à liquide du ou des caloducs 12 et plus précisément ayant les mêmes formes et dimensions que le ou les évaporateurs 13 ou condenseurs 15. Il est de préférence fabriqué en un métal pouvant résister à la chaleur 14, comme du titane par exemple.

Grâce à ce mode de réalisation de l'invention, le cadre avant 9 peut être décalé en direction du bord d'attaque de la nacelle 2. En conséquence, le volume de l'espace annulaire 8 est diminué. Cet avantage permet donc de diminuer le débit d'air chaud 14 nécessaire pour dégivrer le volume de l'espace annulaire 8.

La partie basse 9a du cadre avant 9 présente une configuration recourbée vers l'intérieur de la nacelle 2 et comporte un méplat 9b sur lequel est fixé le dispositif d'étanchéité 16. En conséquence, le dispositif d'étanchéité 16 est fixé sur la lèvre 7 d'entrée d'air et sur le méplat 9b du cadre avant 9 par tout moyen de fixation usuel.

Préférentiellement, les évaporateurs 13 sont répartis sur l'ensemble de la face interne 7a de la lèvre 7.

Préférentiellement, les condenseurs 15 sont répartis sur l'ensemble de la virole interne 5.

Chacun des évaporateurs 13 est relié de manière fluidique à au moins un condenseur 15 par au moins un caloduc 12 comme illustré sur [Fig. 2] et [Fig.3].

De manière avantageuse, le caloduc 12 est un caloduc oscillant. Il consiste en un enchainement de tubes capillaires comprenant un fluide à volume constant présent en deux phases, liquide et gazeuse. La chaleur présente du côté de la face interne 7a de la lèvre 7 va vaporiser le liquide en bulles de gaz au niveau du ou des évaporateurs 13 en faisant augmenter la pression. Le froid présent (givre) du côté du ou des condenseurs 15 va transformer les bulles en liquide et créer une dépression. Ce gradient de pression va permettre au fluide caloporteur gazéifié de se déplacer du ou des évaporateurs 13 au ou aux condenseurs 15 et au fluide caloporteur liquéfié du ou des condenseurs 15 à ou aux évaporateurs 13 entrainant ainsi un transfert de chaleur.

De manière avantageuse, le caloduc 12 peut être un caloduc en boucle (« LHP » en anglais pour Loop Heat Pipe). Les avantages d'un tel caloduc sont, notamment, que les caractéristiques de transfert de chaleur sont plus élevées que les autres sortes de caloducs et que, quelle que soit la position du caloduc 12, celui-ci conserve un fonctionnement optimal.

Le fluide utilisé dans le caloduc est un fluide répondant aux contraintes aéronautiques (feu, fumée, ...) et aux conditions extrêmes de vol (température, pression, ...).

Le retour du fluide caloporteur liquéfié vers l'évaporateur 13 ou du fluide caloporteur gazéifié vers le condenseur 15 peut se faire grâce au principe de gravité ou au principe de capillarité.

Les évaporateurs 13 (respectivement les condenseurs 15) peuvent être espacés d'une distance de 3 mm à 15 mm en fonction de la qualité de dégivrage souhaitée, le diamètre des évaporateurs 13 et des condenseurs 15 pouvant varier de 3 mm à 4 mm.

Généralement, l'espace annulaire 8 est composé de deux conduites en D (« D-duct » en anglais) formant un anneau qui est situé entre le bord d'attaque et le cadre avant 9.

L'espace annulaire 8 de la lèvre est agencé pour recevoir une alimentation en air chaud 10 comme représenté sur [Fig. 2].

Selon un mode de réalisation, la source chaude correspond à l'air chaud 10 alimentant l'espace annulaire 8 de la lèvre 7.

De façon non limitative, l'air 10 alimentant l'espace annulaire 8 de la lèvre 7 est généralement chauffé dans des plages de températures allant de 250°C à 450°C.

Avantageusement, au moins un caloduc 12 est configuré pour transférer la chaleur 14 de la face interne 7a de la lèvre 7 à la virole interne 5 située en aval du cadre avant 9.

Le ou les évaporateurs 13 sont ainsi configurés pour extraire au moins une partie de la chaleur 14 fournie par l'air chaud 10 alimentant l'espace annulaire 8 de la lèvre 7. La chaleur 14 est alors transférée au fluide caloporteur, comme représenté sur [Fig. 2] et [Fig. 3].

L'air chaud 10 alimentant l'espace annulaire 8 peut provenir d'un dispositif de chauffage d'air 19 de l'aéronef AC. Le dispositif de chauffage d'air 19 est configuré pour produire l'air chaud 10 alimentant l'espace annulaire 8 de chacune des nacelles 2.

Par exemple, l'aéronef AC comprend au moins un tuyau 20 reliant le ou les dispositifs de chauffage d'air 19 à l'espace annulaire 8 de chacune des nacelles 2. Le ou les tuyaux 20 sont configurés pour transporter l'air chaud 10 produit par le dispositif de chauffage d'air 19 à l'espace annulaire 8 de la lèvre 7. L'aéronef AC comprend également au moins une vanne 21 pour chacun des tuyaux 20 configurée pour réguler en pression et en débit l'air chaud 10 circulant dans le ou les tuyaux 20.

Le ou les tuyaux 20 peuvent correspondre à des tuyères ou des tubes picolo.

Par exemple, le dispositif de chauffage d'air 19 correspond à des étages de compression du moteur 3 entouré par la nacelle 2. Ainsi, les étages de compression d'un moteur 3 alimentent en air chaud 10 l'espace annulaire 8 de la lèvre 7 de la nacelle 2 qui entoure le moteur 3.

Ainsi le dispositif de chauffage 19 alimente en air chaud 10 l'espace annulaire 8 de la lèvre 7. L'air chaud 10 circule alors dans l'espace annulaire 8 de la lèvre 7. La chaleur de l'air chaud 10, est ensuite extraite par le ou les évaporateurs 13 fixés sur la face interne 7a de la lèvre 7. Pour cela, le fluide caloporteur dans le ou les évaporateurs 13 est vaporisé et est amené au ou aux condenseurs 15. La chaleur donc est transmise à la virole interne 5 par l'intermédiaire du ou des condenseurs 15 dans lesquels le liquide caloporteur se liquéfie en fournissant la chaleur aux condenseurs 15. Le liquide caloporteur liquéfié retourne ensuite au ou aux évaporateurs 13 par le ou les caloducs 12.

Ce système de protection 1 permet ainsi un transfert efficace de la chaleur de la face interne 7a de la lèvre 7 à la virole interne 5. En outre, grâce au contact direct entre le ou les évaporateurs 13 et la chaleur 14 fournie par l'air chaud 10 alimentant l'espace annulaire 8 de la lèvre 7, le système de protection 1 permet d'utiliser directement la chaleur de l'air chaud et donc d'utiliser de manière plus efficace la chaleur 14 fournie par l'air chaud 10.

De plus, ce système ne modifie pas la structure du panneau acoustique qui peut être dégivré par des moyens de dégivrage connus dans l'art antérieur.

## Revendications

1. Nacelle (2) de moteur (3) d'aéronef comprenant un système de protection contre le givre, la nacelle (2) comprenant une virole interne (5) présentant une face interne (5a), une lèvre (7) d'entrée d'air présentant une face interne (7a) et formant un bord d'attaque de la nacelle (2) et un cadre avant (9) définissant, avec la lèvre (7), un espace annulaire (8), **caractérisé en ce que** le système de protection (1) comprend un dispositif échangeur de chaleur (11) comportant au moins un caloduc (12) configuré pour transférer à la virole interne (5) située en aval du cadre avant (9) de la chaleur (14) émise par une source chaude dans l'espace annulaire (8)

2. Nacelle (2) de moteur (3) d'aéronef selon la revendication 1 **caractérisée en ce que** le dispositif échangeur de chaleur (11) comprend en outre : un fluide caloporteur ; au moins un évaporateur (13) connecté thermiquement à la source chaude, le ou les évaporateurs (13) étant configurés pour extraire au moins une partie de la chaleur (14) fournie par la source chaude, la chaleur (14) extraite étant transférée au fluide caloporteur ; au moins un condenseur (15) fixé sur la face interne (5a) de la virole interne (5) située en aval du cadre avant (9), le ou les condenseurs (15) étant configurés pour fournir au moins une partie de la chaleur (14) extraite par le ou les évaporateurs (13) à la virole interne (5), la chaleur (14) extraite étant transférée au ou aux condenseurs (15) par l'intermédiaire du fluide caloporteur ; chacun des évaporateurs (13) étant relié de manière fluidique à au moins un condenseur (15) par au moins un caloduc (12) dans lequel circule le fluide caloporteur.

3. Nacelle (2) de moteur (3) d'aéronef selon les revendications 1 ou 2 **caractérisée en ce que** le ou les évaporateurs (13) sont fixés sur la face interne (7a) de la lèvre (7) d'entrée d'air, en amont du cadre avant (9).

4. Nacelle (2) de moteur (3) d'aéronef selon les revendications 1 à 3, **caractérisée en ce que** le ou les caloducs (12) sont des caloducs oscillants (PHP).

5. Nacelle (2) de moteur (3) d'aéronef selon les revendications 1 à 3, **caractérisée en ce que** le ou les caloducs (12) sont des caloducs à boucle (LHP).

6. Nacelle (2) de moteur (3) d'aéronef selon l'une quelconque des revendications précédentes, **caractérisée en ce que** le ou les caloducs (12) comprennent au moins une conduite à liquide configurée pour transporter, du ou des condenseurs (15) à ou aux évaporateurs, le fluide caloporteur liquéfié par refroidissement dans le ou les condenseurs (15).

7. Nacelle (2) de moteur (3) d'aéronef selon l'une quelconque des revendications précédentes, **caractérisée en ce que** le ou les caloducs (12) comprennent au moins un tube capillaire comprenant un fluide à volume constant.

8. Nacelle (2) de moteur (3) d'aéronef selon l'une quelconque des revendications précédentes, **caractérisée en ce que** le ou les évaporateurs (13) sont répartis sur l'ensemble de la face interne (7a) de la lèvre (7).

9. Nacelle (2) de moteur (3) d'aéronef selon l'une quelconque des revendications précédentes, **caractérisée en ce que** le ou les condenseurs (15) sont répartis sur l'ensemble de la face interne (5a) de la virole interne (5)
